# FASCICULE DE BREVET EUROPEEN

(11) **EP 1 067 013 B1**
(45) Date de publication et mention de la délivrance du brevet: **15.10.2003**
(21) Numéro de dépôt: 00420155.4
(22) Date de dépôt: 06.07.2000
(51) Int. Cl.: B60N 2/235

(54) **Dispositif de réglage d'un dossier de siège à double articulation par une commande unique**
Vorrichtung zum Verstellen einer Sitzrückenlehne mit Doppelgelenk und einer einzelnen Betätigung
Device for adjusting the backrest of a seat with a double articulation and a single control

(30) Priorité: 08.07.1999 FR 9909132
(43) Date de publication de la demande: 10.01.2001
(73) Titulaire: Grupo Antolin-Ingenieria S.A., 09080 Burgos (ES)
(72) Inventeur: Chabanne, Jean-Pierre, 89710 Champvallon (FR); Duchateau, Jean, 43330 Pont Salomon (FR); Gagnaire, Eric, 42600 Savigneux (FR)
(74) Mandataire: Maureau, Philippe

(56) Documents cités:
- US-A- 4 438 974
- US-A- 4 484 779
- US-A- 5 052 748
- US-A- 5 100 202
- US-A- 5 203 608
- US-A- 5 435 624
- US-A- 5 522 643
- US-A- 5 590 932
- PATENT ABSTRACTS OF JAPAN vol. 016, no. 277 (C-0954), 22 juin 1992 (1992-06-22) & JP 04 071505 A (JOHNAN SEISAKUSHO CO LTD), 6 mars 1992 (1992-03-06)

## Description

L'invention est relative aux sièges pour véhicules de transport et en particulier pour véhicules automobiles. Elle concerne plus spécialement les sièges dont le dossier comporte une première articulation transversale, permettant de régler l'inclinaison du dossier et obtenir le confort désiré par l'occupant, et une deuxième articulation, située généralement au-dessus de la première, et permettant de rabattre vers l'avant le dossier dans une position sensiblement horizontale où elle forme une tablette. Cette position, qui peut être utilisée pour poser les objets divers, permet également, de réduire le volume de l'ensemble du siège dans le cas de son escamotage à l'intérieur du véhicule et, dans le cas de son extraction hors du véhicule, pour en augmenter le volume intérieur.

Dans la plupart des sièges actuels, chacune des articulations est associée à des moyens de verrouillage distincts, par exemple de type secteur denté coopérant avec des verrous dentés, et chacun de ces moyens possède ses propres moyens de commande. Il en résulte qu'un utilisateur mal informé ou inattentif aux instructions portées sur le siège, peut confondre les moyens de commande et, par exemple, débloquer la deuxième articulation de rabattement, alors qu'il souhaite modifier la position de confort du dossier.

Si le siège est équipé de points d'ancrage d'une ceinture de sécurité et que la manoeuvre de réglage est effectuée lors d'un freinage violent, l'utilisateur, en position assise, peut être projeté en avant sans aucune retenue avec le risque d'être, au moins blessé.

Pour remédier à cela, des sièges avec dossier à double articulation sont équipés d'une commande unique déverrouillant les deux articulations du dossier mais coopérant avec des moyens complémentaires n'autorisant le déverrouillage de la seconde articulation de pliage en tablette qu'à partir d'une position définie de la structure du dossier, par rotation autour de la première articulation de réglage du confort.

Les dispositifs actuels de ce type sont encombrants et comportent des moyens de verrouillage qui sont disposés, là où il reste de la place, c'est-à-dire dans des endroits où ils sont soumis à des composantes d'efforts supplémentaires, ce qui oblige à les surdimensionner et à augmenter le poids général du siège. Cet encombrement important est également gênant pour la garniture du dossier, qui doit comporter localement des réserves pour loger le mécanisme et les moyens de commande et qui, de ce fait, est plus coûteux, plus fragile, et plus délicat à mettre en place.

La présente invention a pour objet de remédier à ces inconvénients en fournissant un dispositif de réglage par une commande unique d'un dossier de siège à double articulation ayant un encombrement réduit et permettant, par une diminution des efforts de réaction sur les verrous, de réduire leur section résistante et la masse du dispositif.

A cet effet, dans le dispositif selon l'invention, la structure d'assise est solidaire, au moins d'un côté, d'un secteur denté convexe centré sur la première articulation qui le traverse et par rapport auquel peut pivoter un boîtier en deux parties s'étendant de chaque côté de ce secteur denté, tandis que la structure de dossier est solidaire, au moins du même côté, d'une part, de deux bras s'étendant de part et d'autre du boîtier et s'articulant autour de la deuxième articulation portée par ce boîtier, et, d'autre part, d'un secteur denté concave, centré sur cette deuxième articulation, et que le boîtier contient :
- un verrou denté supérieur apte à pénétrer dans la denture du secteur denté concave lié au dossier,
- un verrou denté inférieur apte à pénétrer dans la denture du secteur denté convexe lié à l'assise,
- et entre ces deux verrous, une came pivotante double calée sur un axe transversal parallèle à la deuxième articulation, et relié à un unique moyen de commande, ladite came pouvant occuper une position de verrouillage, dans laquelle elle appuie sur des formes en came de chacun des verrous dentés pour bloquer les deux articulations, et une position de déverrouillage, dans laquelle elle libère ces verrous et permet leur éloignement du secteur denté correspondant.

Grâce à cette disposition, les secteurs dentés, respectivement concave et convexe, avec leurs moyens de verrouillage, sont sensiblement alignés avec l'axe de rotation de la première articulation, ce qui supprime toute composante de réaction les sollicitant en cas de surcharge, et permet de réduire leurs dimensions donc leur poids. Par ailleurs, la disposition de la plupart des éléments dans un boîtier, engagé entre les deux bras solidaires de la structure d'assise, permet de donner au dispositif, un encombrement réduit qui facilite son intégration sur le côté du dossier et permet d'utiliser, pour ce dossier, des garnitures beaucoup plus simples à fabriquer et à poser.

Dans une forme d'exécution, le verrou denté supérieur est solidaire d'un bras de butée s'étendant dans le boîtier jusqu'au voisinage d'une butée semi-circulaire ménagée sur le secteur denté convexe inférieur pour s'opposer au déverrouillage de ce verrou, sauf lorsque le dossier est en position avancée maximale par rotation autour de la première articulation de réglage du confort.

D'autres caractéristiques et avantages ressortiront de la description qui suit en référence au dessin schématique annexé représentant, à titre d'exemple deux formes d'exécution de ce dispositif.
Figure 1 est une vue de côté en élévation d'une première forme d'exécution, lorsqu'il est en position de verrouillage,
Figures 2 et 3 sont des vues du dispositif, en position de verrouillage après, respectivement, enlèvement d'une partie du boîtier, et enlèvement de la palette d'actionnement du verrou inférieur et du bras de butée pour mieux faire voir la came centrale,
Figure 4 est une vue similaire à la figure 2, mais lorsque la came est venue dans sa position de commande du déverrouillage,
Figure 5 est une vue similaire à la figure 4 mais montrant le mécanisme en position de commande de déverrouillage, lorsque le dossier est dans une position intermédiaire de confort,
Figures 6, 7 et 8 sont des vues en coupe suivant, respectivement, VI-VI de figure 1, VII-VII de figure 2, et VIII-VIII de figure 1,
Figure 9 est une vue en perspective éclatée des différents composants de la forme d'exécution des figures 1 à 8,
Figures 10 et 11 sont des vues similaires aux figures 2 et 3 mais concernant une deuxième forme d'exécution de l'invention,
Figure 12 est une vue en coupe longitudinale suivant XII-XII de figure 10,
Figure 13 est une vue en perspective par le côté extérieur d'une troisième forme d'exécution du dispositif,
Figure 14 est une vue de côté en élévation du dispositif de figure 13, après enlèvement d'une partie du boîtier d'assise et du bras extérieur de la structure de dossier,
Figure 15 est une vue en coupe suivant XV-XV de figure 14,
Figure 16 est une vue similaire à la figure 14, mais lorsque le dossier est verrouillé en position tablette.

Dans ce dessin, A désigne de manière générale la structure d'assise, B la structure de dossier, C1 la première articulation assurant le réglage des positions de confort du dossier, et C2 la deuxième articulation permettant le rabattement de la structure de dossier B en position de tablette, sensiblement au-dessus de l'assise.

Dans le dispositif selon l'invention, la structure d'assise A présente, latéralement d'un côté et sur sa partie arrière, une crosse 2 sur laquelle est fixé par des organes de fixation 3, un secteur denté 4 constitué par deux tôles juxtaposées. Ce secteur denté présente une denture convexe 4a dont les rayons sont centrés sur l'axe géométrique de la première articulation C1. Le secteur denté 4 est traversé par une lumière semi-circulaire 5 dont les rayons sont centrés sur l'axe géométrique de C1 et une butée semi-circulaire 6 dont les rayons sont également centrés sur C1. Plus précisément, la butée semi circulaire 6 est formée par un semi découpage de l'une des tôles constituant le secteur denté 4, et de manière à former une saillie débordant latéralement.

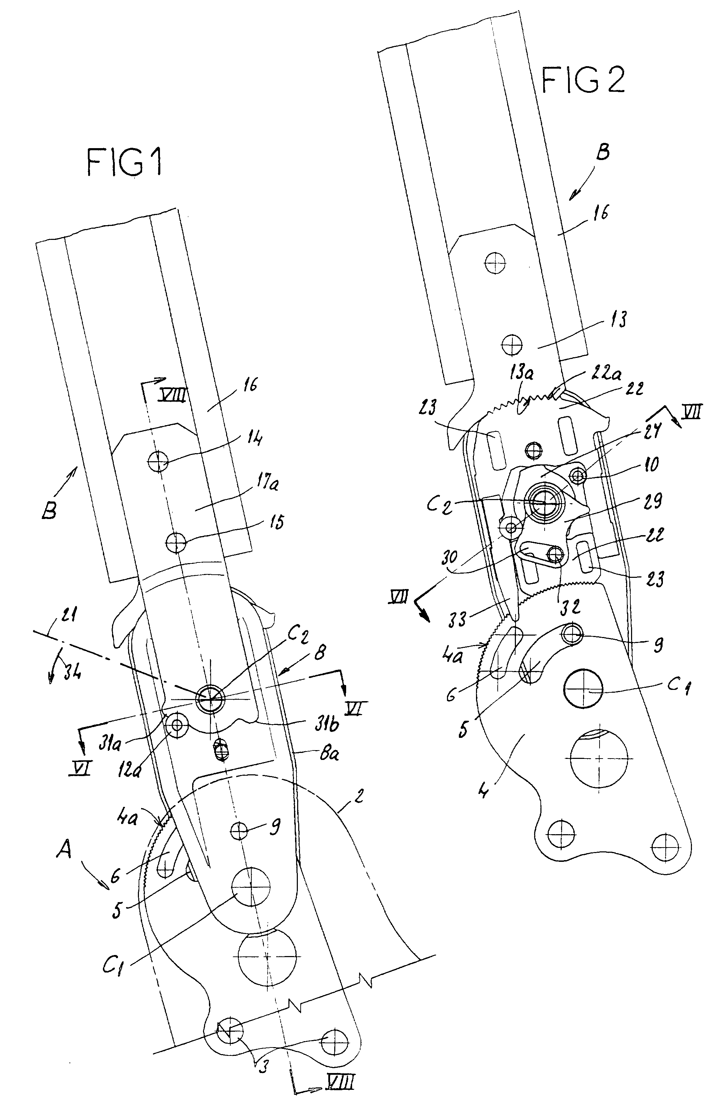

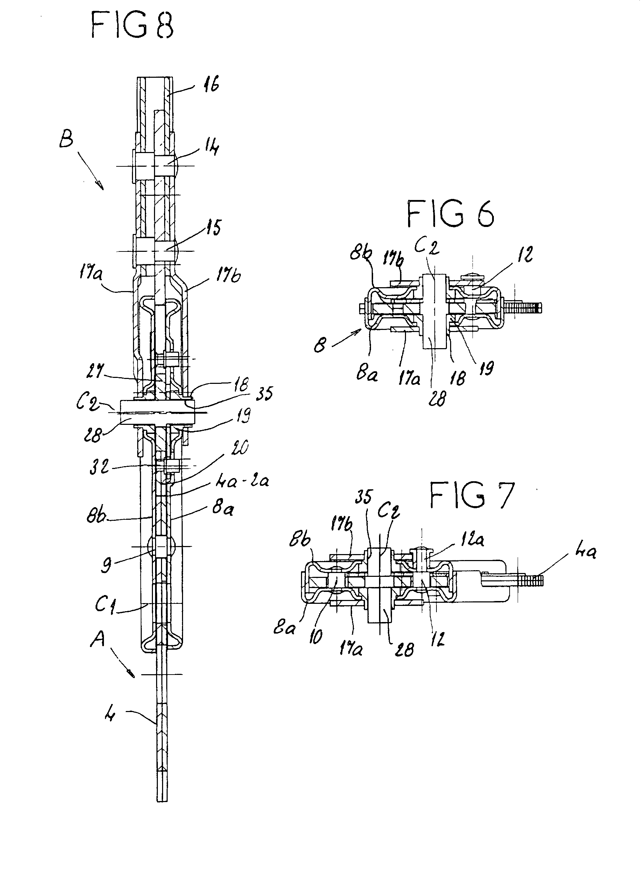

Sur l'axe 28 matérialisant l'articulation C1, sont articulés les deux flasques 8a, 8b d'un boîtier 8. Ces deux flasques s'emboîtent l'un dans l'autre, comme montré sur les figures 6 et 7, et sont liés l'un à l'autre par divers axes épaulés tels celui 9, représenté à la figure 8. Les extrémités de cet axe dépassant des flasques sont rivées par bouterollage. Les figures 1 et 2 montrent que la partie centrale de l'axe 9 peut circuler librement dans la lumière 5 du secteur denté 4. Les extrémités de cette lumière constituent des butées de limitation de la course de réglage des diverses positions de confort du dossier, obtenues par pivotement autour de la première articulation C1. Les deux flasques 8a, 8b du boîtier sont également reliés par des axes 10 et 12, visibles figures 2 à 4.

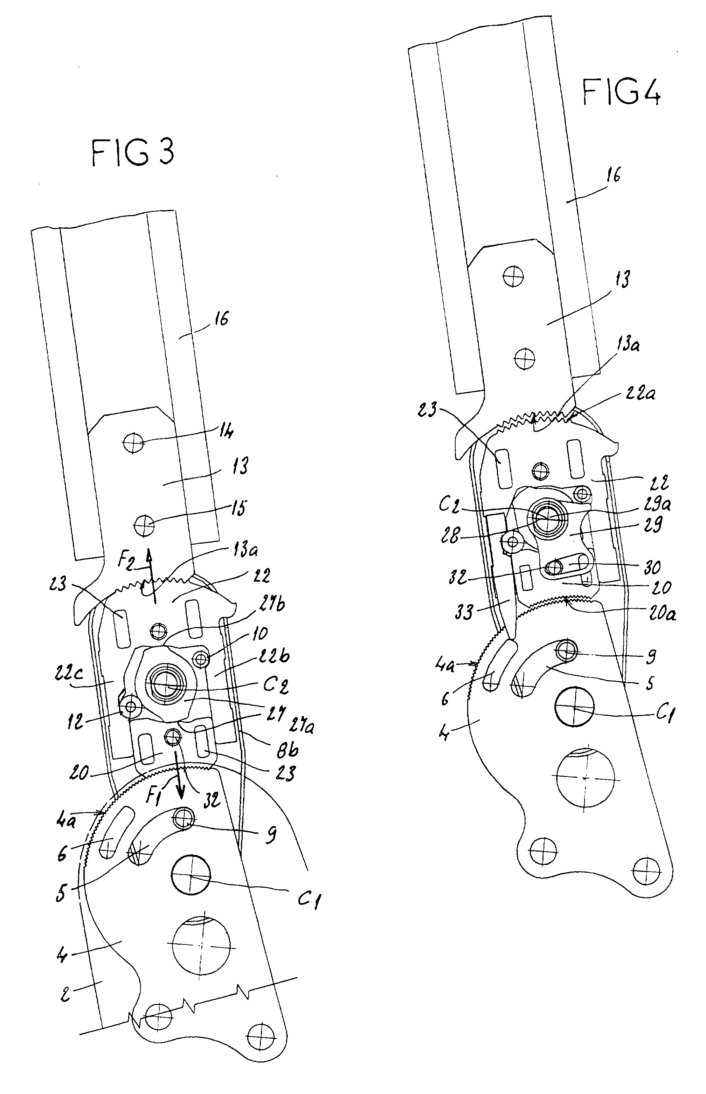

Comme le montre la figure 8, les deux flasques 8a, 8b du boîtier se répartissent également de part et d'autre de l'extrémité d'un secteur denté supérieur 13, lié rigidement, par des axes 14 et 15 aux extrémités bouterollées, à une poutre 16 faisant partie de la structure B du dossier. Comme montré figure 3, le secteur denté 13 présente une denture convexe 13a dont les rayons sont centrés sur l'axe géométrique de la deuxième articulation C2. La poutre 16 (figure 8) est également liée par les axes 14 et 15 à deux bras 17a, 17b qui la prolonge vers le bas et viennent de part et d'autre de la partie supérieure du boîtier 8. A son extrémité inférieure, chacun de ces bras comporte un palier par lequel il peut pivoter sur la portée cylindrique 18 d'une douille 19, elle-même disposée dans un palier approprié du flasque 8a, 8b correspondant du boîtier. Les portées 18 constituent ainsi la seconde articulation C2.

Les figures 3 à 4 montrent que le boîtier 8 contient un verrou inférieur 20 et un verrou supérieur 22. Dans cette forme d'exécution, les verrous sont tous les deux déplaçables en translation longitudinale. Le verrou inférieur 20 comporte une denture 20a qui est concave et peut s'engager dans la denture convexe 4a du secteur denté 4, tandis que le verrou supérieur 22 comporte une denture convexe 22a qui peut s'engager dans la denture concave 13a du secteur denté 13.

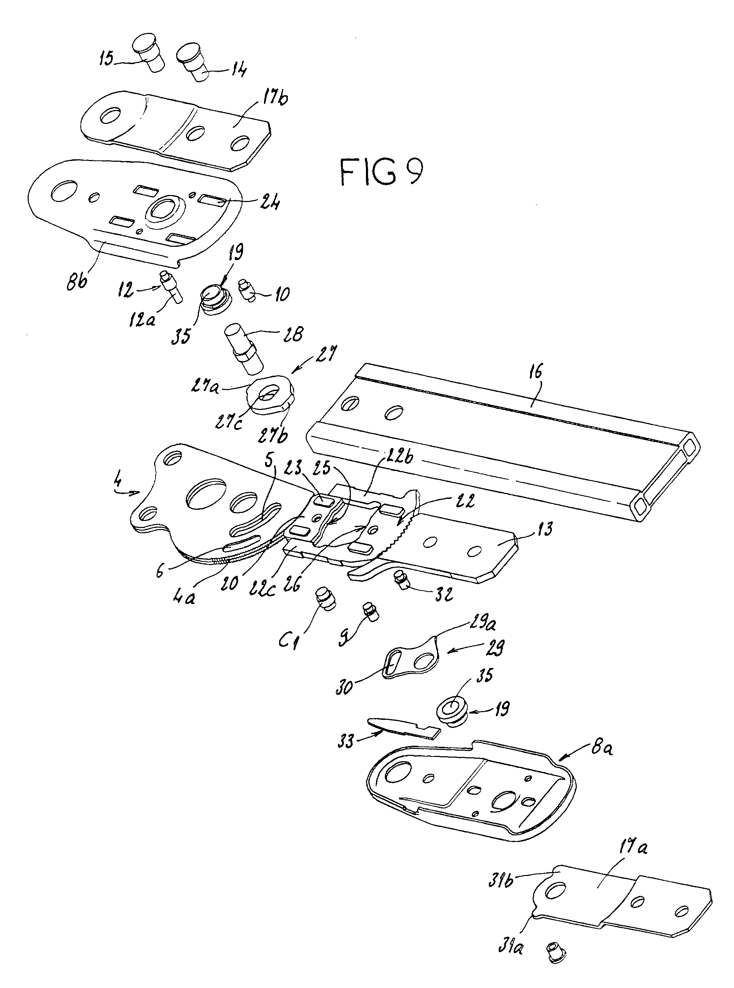

Comme le montre plus en détails la figure 3, le verrou supérieur 22 présente la forme générale d'un U retourné entre les deux ailes 22b, 22c duquel peut coulisser librement le verrou inférieur 20. Pour assurer son guidage en translation longitudinale, chacun des verrous comporte deux semi découpes 23, parallèles et longiformes, montées coulissantes dans des lumières longitudinales 24, visibles figure 9, et réalisées dans l'un des flasques 8a, 8b. Dans leur partie intérieure, les deux verrous comportent des profils en forme de rampes respectivement 25 pour le verrou 20 et 26 pour le verrou 22, coopérant avec les portées opposées, respectivement 27a et 27b, d'une came double 27. Cette came est liée en rotation, par exemple, par un alésage avec méplat 27c, montré figure 9, avec l'arbre 28, monté libre en rotation dans les douilles 19 et lui-même lié à un levier de commande, schématisé par le trait mixte épais 21, figure 1.

Cet arbre 28 est lié en rotation, par exemple par un méplat, à une palette 29, visible figures 2, 4, 5 et 6, et dont la partie inférieure est traversée par une lumière rectiligne 30, coopérant avec un doigt 32 saillant latéralement d'un côté du verrou inférieur 20. La palette est solidaire d'un bras 29a saillant vers l'avant et est apte à venir contre une butée du boîtier, en l'occurrence contre l'axe 10 de liaison des deux flasques 8a, 8b de ce boîtier.

L'axe 12, qui est disposé entre les deux articulations C1 et C2, et à l'arrière de ces articulations, se prolonge à l'extérieur du boîtier, comme montré figure 8 pour former un tenon en saillie 12a constituant butée de limitation de course du basculement du dossier pour la fonction passage en tablette en coopérant avec l'un ou l'autre des deux crans 31a, 31b, visibles figure 1, ménagés à l'extrémité inférieure du bras 17a. Ces deux crans sont en saillie vers le bas et espacés angulairement en fonction de la course désirée.

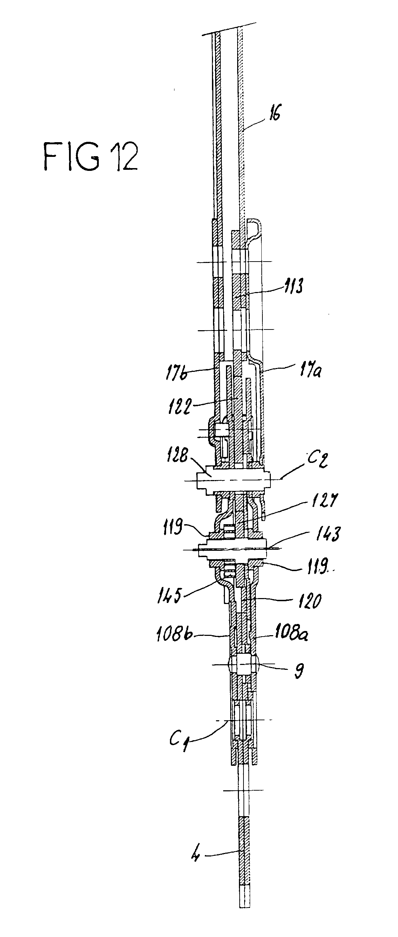

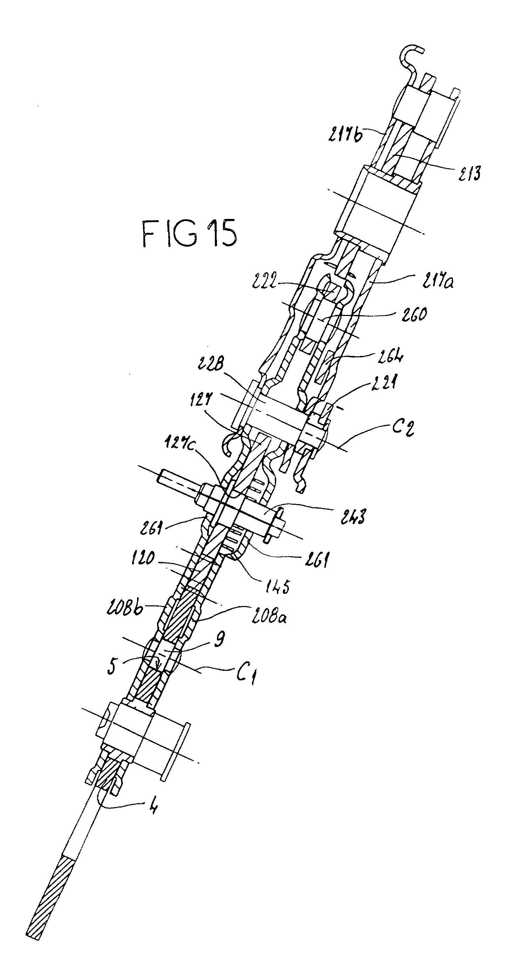

Lorsque le dossier est en position de verrouillage, et comme montré aux figures 2 et 3, les portées 27a, 27b de la came 27 sont maintenues en appui sur les portées 25 et 26 des verrous 20 et 22 par un ressort en spirale sollicitant la came, non représenté dans cette forme d'exécution, mais visible aux figures 12 et 15 pour les autres formes d'exécution. Sous cet effort de rappel, les portées tendent à écarter les verrous et à faire pénétrer leurs dentures dans celles respectives du secteur denté inférieur 4 et du secteur denté supérieur 13.

Lorsque l'occupant du siège actionne le levier de commande 21 lié à l'arbre 28, dans le sens du déverrouillage représenté par la flèche 34 à la figure 1, il provoque la rotation de la came 27 à l'encontre de ses moyens de rappel. Ainsi, les portées 27a, 27b cessent d'appuyer sur les parties 25 et 26 des verrous et permettent le déplacement longitudinal de ces verrous dans le sens du déverrouillage. La figure 4 montre que le déplacement longitudinal vers le haut du verrou inférieur 20 est assuré par la coopération de la lumière 30 et du tenon 32, tandis que le verrou supérieur 22 descend par gravité jusqu'à venir en butée sur l'axe 10 de liaison des deux flasques 8a, 8b du boîtier.

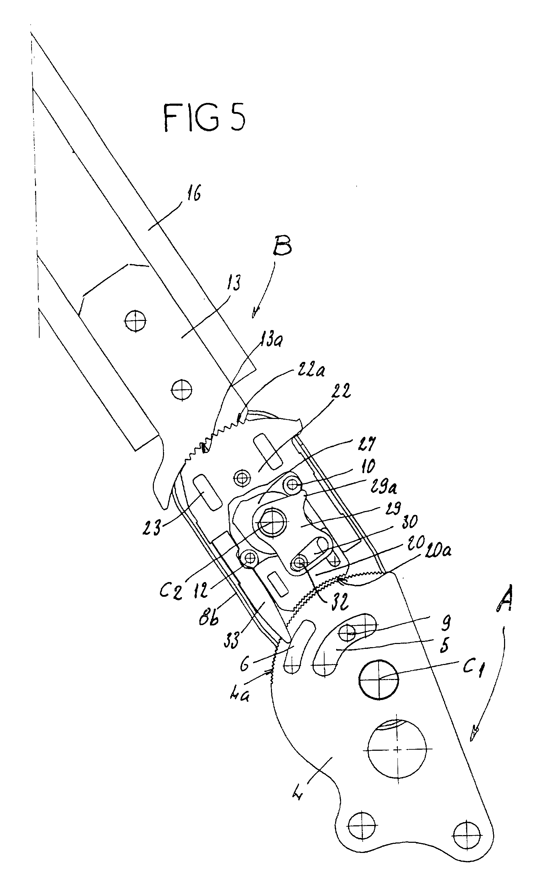

Toutefois, et il s'agit là d'une caractéristique importante de cette forme d'exécution, la descente par gravité du verrou supérieur 22 n'est tolérée que si un bras de butée 33, prolongeant l'aile 22c du verrou 22, n'en est pas empêché par la butée semi-circulaire 6 du secteur denté 4. Ainsi, à la figure 4, où le dossier B est dans la position de confort la plus avancée sur l'avant par pivotement autour de l'axe C1, la butée 33 échappe à la butée semi circulaire 6 et permet le dégagement du verrou supérieur 22, donc la libération de la structure de dossier, qui peut pivoter autour de l'articulation C2 pour venir en position tablette, tandis qu'à la figure 5, où le même dossier est dans une position de confort moins inclinée sur l'avant et alors même que le verrou supérieur 22 est déverrouillé par la came 27, ce verrou supérieur ne peut pas se dégager du secteur denté 13, en raison de l'appui de sa butée 33 sur la butée 6.

On notera que la course de déverrouillage du verrou inférieur 20 est limitée par appui du bras 29a de la palette 29 sur l'axe 10 et que, pour garantir le bon fonctionnement du verrouillage et du déverrouillage en évitant, soit les coincements, soit les jeux excessifs, les alésages 35 (figure 9) ménagés dans les douilles 19 et destinés à recevoir l'arbre 28, sont oblongs. Ainsi, il est possible au montage, par rotation des douilles 19 dans le boîtier 8, d'adapter les jeux fonctionnels aux besoins.

Dans un but de simplification, ne sont pas représentés sur les figures les divers moyens de rappel, respectivement de redressement de la structure de dossier B par rapport à l'articulation C2, de redressement de la même structure par rapport à l'articulation C1, de même que les moyens de rappel du levier de commande et de la came 27.

Les figures 6 à 8 montrent que l'ensemble du mécanisme est peu encombrant et forme un ensemble pouvant, sans aucune difficulté, s'insérer dans le prolongement de l'un des montants de la structure de dossier B en permettant d'utiliser, pour le garnissage de cette structure, des garnitures standard très faciles à mettre en oeuvre. Par ailleurs, l'examen de la figure 3 fait apparaître que les efforts résultants F1, F2 sollicitant les verrous opposés 20, 22 sont sensiblement dans le plan passant par les axes des deux articulations C1 et C2 et qu'ainsi les pièces contribuant au verrouillage n'ont pas à supporter des efforts supplémentaires provenant de couples parasites obligeant à surdimensionner les pièces.

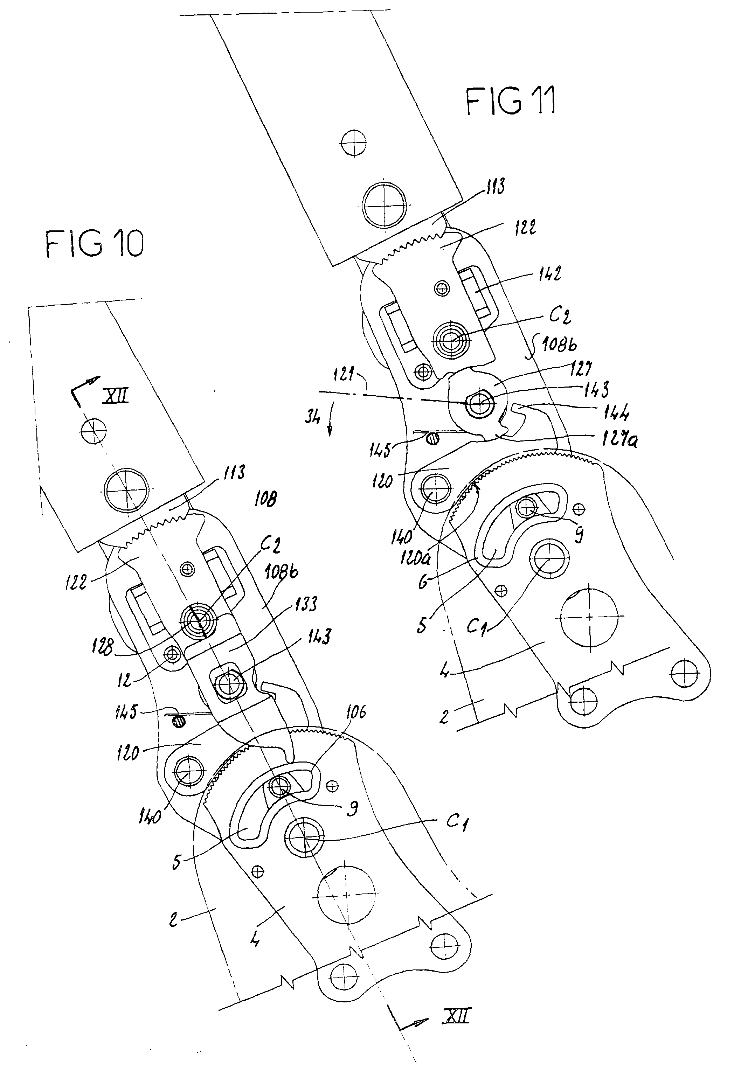

Les figures 10, 11 et 12 représentent une autre forme d'exécution de ce dispositif. Les pièces identiques à la première forme d'exécution portent la même référence, tandis que les pièces modifiées portent la même référence majorée de 100, les pièces nouvelles étant référencées à partir de 140.

Ce dispositif se différencie du précédent par la forme du verrou cranté inférieur 120 qui n'est plus coulissant mais articulé autour d'un axe 140 porté par les deux flasques 8a, 8b du boîtier. Le verrou cranté supérieur 122 est monté coulissant entre des semi découpes 142 du flasque 8b et est solidaire d'un bras de butée 133, visible figure 10 coopérant avec une butée 106 formée par emboutissage du bord périphérique de la lumière 5.

Enfin, la came 127 est liée en rotation à un arbre 143 distinct de l'axe 128 de l'articulation C2, mais parallèle à lui. Cet arbre 143 est monté libre en rotation dans le boîtier 108 et lié à la poignée de commande 121 (figure 11).

Lors de l'actionnement de cette poignée de commande 121 dans le sens du déverrouillage, indiqué par la flèche 34, la portée inférieure 127a de la came 127 libère le verrou 120 et vient en contact avec un crochet 144 de ce verrou pour le faire pivoter et dégager sa partie dentée 120a des dents du secteur denté 4.

Un ressort en spirale 145, interposé entre le boîtier 108 et l'arbre 143, ramène la came 127 dans sa position de verrouillage.

Comme dans la forme d'exécution précédente et comme montré figure 12, l'arbre 143 de la came 127 tourillonne dans les alésages oblongs de douilles 119 disposées dans des paliers des parties de boîtier 108a, 108b pour assurer le rattrapage des jeux fonctionnels

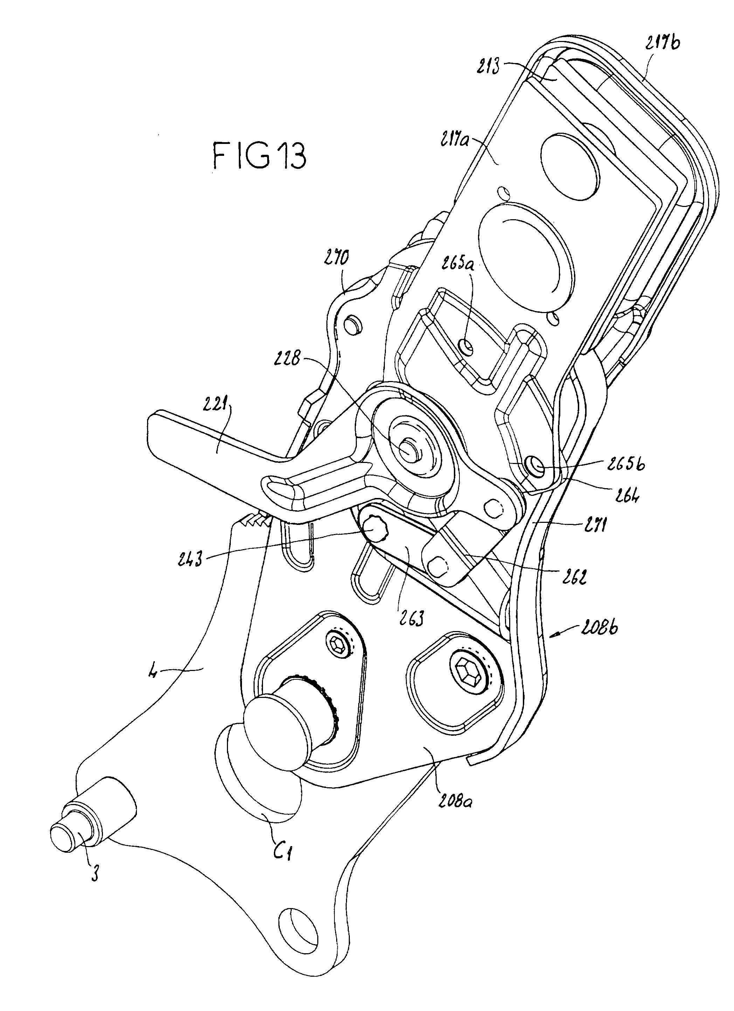

Les figures 13 à 16 sont relatives à une troisième forme d'exécution du dispositif qui est représenté dans une position inversée de 180 ° par rapport aux autres figures, c'est-à-dire avec l'avant du siège regardant la gauche. Les pièces identiques aux deux autres formes d'exécution porteront les mêmes références, tandis que les éléments modifiés porteront la même référence majorée de 200, et que les éléments nouveaux seront numérotés à partir de 260.

Cette forme d'exécution se différencie des précédentes par les points suivants :
- le dispositif n'est pas équipé d'un bras de butée 33 ou 133 coopérant avec une butée semi-circulaire 6-106,
- la came double 127, calée en rotation sur son arbre 243, distinct de celui 228 de l'articulation C2, coopère non seulement avec le verrou pivotant inférieur 120, à crochet 144, mais aussi avec un verrou pivotant supérieur 222 monté pivotant autour d'un axe 260,
- l'arbre 243 de la came est lié à l'une des extrémités d'un ressort spiral 145 dont l'autre extrémité prend appui sur un axe traversant 210 du boîtier 208. Il tourillonne directement (figure 15) dans des alésages 261 ménagés dans les parties 208a et 208b de ce boîtier, et oblongs suivant une direction sensiblement parallèle à l'axe longitudinal de ce boîtier. La différence entre la longueur de partie oblongue et le diamètre de l'alésage est de l'ordre de 0,2 à 0,4 mm,
- le levier de commande de déverrouillage 221 est calé sur l'axe 228 (figure 13) et est relié par une bielle 262 à un maneton 263 calé sur l'arbre 243 de la came, pour obtenir sur la came une multiplication de l'effort manuel exercé sur le levier et éliminer la sensation de flottement que procurerait un levier calé sur l'axe 228 à came 243 monté flottant dans ses paliers,
- le verrouillage du dossier en position tablette est assuré par un verrou supplémentaire 264 fixé, par des rivets 265a, 265b, contre la face intérieure de l'un des bras 217a, 217b de la structure de dossier et par exemple celui 217a. L'extrémité inférieure et postérieure du verrou est conformée en cran 266.

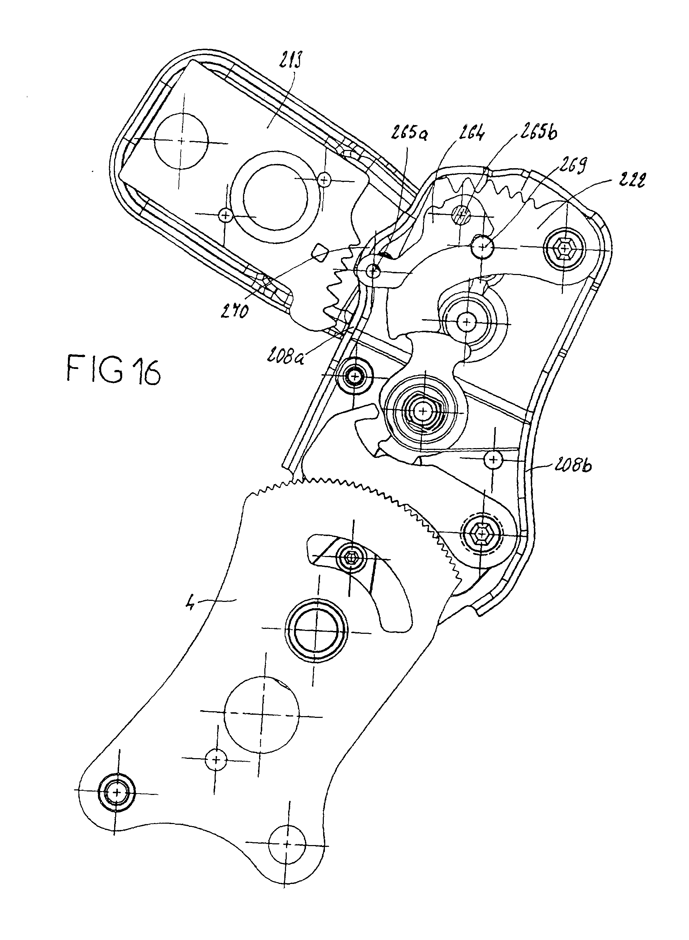

Lors du basculement du dossier vers l'avant autour de l'articulation C2, et comme montré figure 16, le verrou 264 suit le mouvement de la structure de dossier et vient, en fin de basculement défini par butée de l'un de ses rivets 265a sur le bord retourné antérieur 270 du boîtier 208b, au voisinage d'un doigt 269 du verrou 222. Le relâchement du levier 221 provoque le rappel de la came 127, et l'écartement des verrous 220, 222 et en conséquence, l'engagement du doigt 269 dans le cran 266.

Pour déverrouiller la position tablette, il faut actionner le levier 221. Celui-ci libère le verrou 222 qui, par gravité, pivote vers le bas, libère le cran 266, et permet le basculement vers l'arrière du dossier.

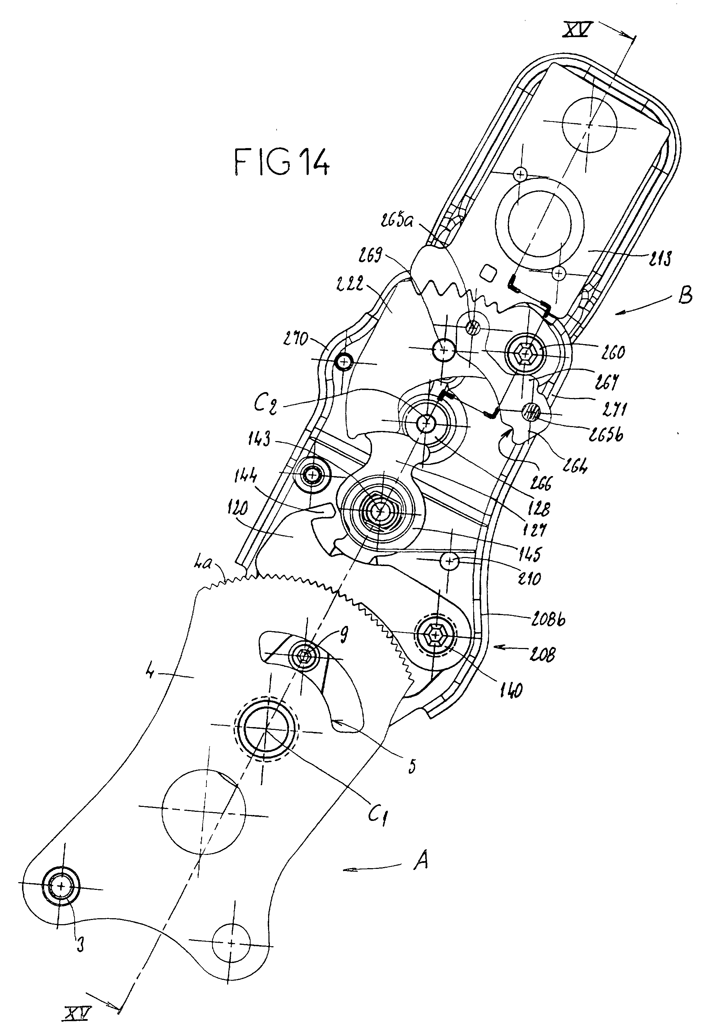

En fin de redressement du dossier, et comme montré figure 14, c'est le rivet 265b qui vient en contact avec le bord retourné arrière 271 du boîtier 208b et assure la limitation de ce redressement.

Le réglage de confort par pivotement de la structure de dossier B autour de l'articulation C1, s'effectue, comme précédemment, après actionnement du levier 221, entraînant la libération des verrous pivotants 220 et 222.

## Revendications

1. Dispositif de réglage par commande unique d'un dossier de siège à double articulation, comprenant une structure de dossier (B) reliée à une structure de siège (A) par une première articulation (C1), permettant le réglage de l'inclinaison de la structure de dossier (B), et une deuxième articulation (C2), permettant de rabattre la structure de dossier (B) sur le siège, chaque articulation étant associée à des moyens de verrouillage, par secteur denté-verrou denté et à des moyens de commande de déverrouillage provoquant la libération du secteur denté par le verrou, **caractérisé en ce que** la structure d'assise (A) est solidaire, au moins d'un côté, d'un secteur denté (4) convexe, centré sur la première articulation (C1) qui le traverse et par rapport auquel peut pivoter un boîtier (8) en deux parties (8a, 8b) s'étendant de chaque côté de ce secteur denté,
tandis que la structure de dossier (B) est solidaire, au moins du même côté, d'une part, de deux bras (17a, 17b) s'étendant de part et d'autre du boîtier (8) et s'articulant autour de la deuxième articulation (C2) portée par ce boîtier, et, d'autre part, d'un secteur denté concave (13, 113), centré sur cette deuxième articulation, et que le boîtier (8) contient :
- un verrou denté supérieur (22, 122, 222) apte à pénétrer dans la denture du secteur denté concave (13, 113) lié au dossier (B),
- un verrou denté inférieur (20, 120) apte à pénétrer dans la denture du secteur denté convexe (4) lié à l'assise (A),
- entre ces deux verrous, une came pivotante double (27, 127) calée sur un axe transversal (28, 147) parallèle à la deuxième articulation (C2), et relié à un unique moyen de commande, ladite came (27, 127) pouvant occuper une position de verrouillage, dans laquelle elle appuie sur des profils en came (25, 26) de chacun des verrous dentés (20, 22, 120, 122) pour bloquer les deux articulations (C1, C2), et une position de déverrouillage, dans laquelle elle libère ces verrous (20, 22) et permet leur éloignement du secteur denté correspondant (4, 13).

2. Dispositif de réglage selon la revendication 1, **caractérisé en ce que** le verrou denté supérieur (22, 122) est solidaire d'un bras de butée (33, 133) s'étendant dans le boîtier (8, 108) jusqu'au voisinage d'une butée semi-circulaire (6, 106) ménagée sur le secteur denté convexe inférieur (4) pour s'opposer au déverrouillage de ce verrou (20, 120), sauf lorsque le dossier (B) est en position avancée maximale, par rotation autour de la première articulation (C1) de réglage du confort.

3. Dispositif de réglage selon la revendication 2, **caractérisé en ce que** la butée semi-circulaire (6) du secteur denté inférieur (20) est formée par une semi-découpe saillant d'un côté du secteur denté, dans la trajectoire verticale du bras de butée (33) du verrou supérieur (22).

4. Dispositif de réglage selon la revendication 1, **caractérisé en ce que** le verrou supérieur (22) a la forme générale d'un U retourné entre les ailes (22b, 22c) duquel le verrou inférieur (20) est monté coulissant et les i déplacements longitudinaux de chacun de ces deux verrous (20, 22) sont guidés par au moins deux semi-découpes (23), longiformes et parallèles, ménagées dans chacun d'eux et circulant dans des découpes (24) ménagées dans l'un ou l'autre des flasques (8a, 8b) du boîtier (8).

5. Dispositif de réglage selon la revendication 1, **caractérisé en ce que** l'axe transversal (28) lié à la came (27) est également lié en rotation à une palette (29) s'étendant vers le bas et traversée par une lumière (30), ladite lumière coopérant avec un doigt (32) saillant latéralement du verrou inférieur (20) pour amener ce verrou en position de déverrouillage.

6. Dispositif de réglage selon la revendication 1, **caractérisé en ce que** le verrou supérieur (122) est monté coulissant entre deux semi-découpes (142) du boîtier (8), tandis que le verrou inférieur (120) est articulé autour d'un axe (140) et comporte un crochet (144) contre lequel vient en appui la partie inférieure (127a) de la came dans la phase de déverrouillage.

7. Dispositif de réglage selon la revendication 1, **caractérisé en ce que** deux flasques (8a, 8b) du boîtier (8) sont reliés par des axes (9, 10, 12), dont l'un (9) circule dans une lumière semi-circulaire (5) du secteur denté inférieur (4), ladite lumière ayant des rayons centrés sur l'axe de la première articulation (C1) et formant, par ses extrémités, butée de limitation du réglage d'inclinaison de confort.

8. Dispositif de réglage selon la revendication 1, **caractérisé en ce que** l'un (12) des axes de liaison des deux flasques (8a, 8b) du boîtier (8) est disposé entre les deux articulations (C1, C2), longitudinalement vers l'arrière et se prolonge, hors du boîtier (8), par un tenon en saillie (12a) constituant butée de limitation de la course de basculement de la structure de dossier (B) autour de la deuxième articulation (C2) de mise en tablette, en coopérant avec deux crans (31a, 31b) angulairement espacés et saillant vers le bas de l'extrémité de l'un des bras (17a, 17b) lié à la structure de dossier.

9. Dispositif de réglage selon la revendication 1, **caractérisé en ce que** l'axe transversal (28, 143) lié à la came (27, 127) de calage des verrous (20, 22, 120, 122) est monté libre en rotation dans deux douilles (19), disposées dans des paliers de chacun des flasques (8a, 8b) du boîtier, chaque douille (19) se prolongeant vers l'extérieur par une portée cylindrique (18) coopérant avec l'un des paliers des bras (17a, 17b) solidaires de la structure de dossier.

10. Dispositif de réglage selon la revendication 9, **caractérisé en ce que** l'alésage (35), ménagé dans chacune des douilles (19), est oblong verticalement pour assurer la compensation des tolérances de fabrication des moyens de verrouillage.

11. Dispositif de réglage selon la revendication 1, **caractérisé en ce que** chacun des verrous dentés, respectivement inférieur (120) et supérieur (222), est articulé sur un axe transversal, respectivement (140) et (260), porté par le boîtier (208) en deux parties de la structure d'assise (A), et coopère avec le profilé en came correspondant de la came double pivotante (127), tandis que ladite came (127) est liée en rotation à un axe transversal (143), monté libre en rotation dans des paliers du boîtier précité, soumis à des moyens de rappel à ressort (145) tendant à ramener la came en position de verrouillage et est lié à un levier de commande (221) amenant la came en position de déverrouillage des verrous dentés (120, 222).

12. Dispositif selon la revendication 11, **caractérisé en ce que** chacun des alésages (261) ménagés dans les deux parties (208a, 208b) du boîtier (208) de la structure d'assise (A) pour les extrémités de l'axe (143) d'entraînement de la came (127) sont oblongs suivant une direction sensiblement parallèle à l'axe longitudinal de ce boîtier pour compenser les jeux de fabrication des organes de verrouillage, et le levier (221) de commande du déverrouillage est calé sur l'axe d'articulation (C2) et est relié par une biellette (262) à un maneton (263), calé sur l'axe (143) de la came (127).

13. Dispositif selon la revendication 11, **caractérisé en ce que** l'un des bras (217a, 217b) de la structure de dossier porte, contre sa face intérieure, un verrou supplémentaire (264) dont l'extrémité inférieure et postérieure est équipée d'un cran (266) apte, en fin de basculement sur l'avant de la structure de dossier (B) à venir en prise avec un doigt (269) porté par le verrou denté supérieur (222) pour verrouiller le dossier en position tablette jusqu'à ce que la came (127) soit actionnée dans le sens du déverrouillage.

## Patentansprüche

1. Einstellvorrichtung durch einmalige Betätigung einer Sitzrückenlehne mit Doppelgelenk, welche eine Rückenlehnenstruktur (B) umfasst, die mit einer Sitzstruktur (A) über ein erstes Gelenk (C1), welches die Neigungseinstellung der Rückenlehnenstruktur (B) erlaubt, und ein zweites Gelenk (C2) verbunden ist, welches das Herunterklappen der Rückenlehnenstruktur (B) auf den Sitz erlaubt, wobei jedes Gelenk Verriegelungsmitteln mittels Zahnsektor-Zahnriegel und Entriegelungsbetätigungsmitteln zugeordnet ist, welche die Freigabe des Zahnsektors durch den Riegel bewirken, **dadurch gekennzeichnet, dass** die Sitzflächenstruktur (A) mindestens auf einer Seite mit einem auf dem ersten Gelenk (C1) zentrierten konvexen Zahnsektor (4) verbunden ist, welcher von diesem durchsetzt ist und bezüglich desselben ein Gehäuse (8) aus zwei Teilen (8a, 8b) schwenken kann, welche sich auf beiden Seiten dieses Zahnsektors erstrecken, wohingegen die Rückenlehnenstruktur (B) einerseits mindestens auf derselben Seite mit zwei Armen (17a, 17b) verbunden ist, die sich zu beiden Seiten des Gehäuses (8) erstrecken und um das zweite von diesem Gehäuse getragene Gelenk (C2) angelenkt sind, und andererseits mit einem auf dem zweiten Gelenk zentrierten konkaven Zahnsektor (13, 113) verbunden ist, und dass das Gehäuse (8) enthält:
- einen oberen Zahnriegel (22, 122, 222), der in der Lage ist, in die Zahnung des konkaven Zahnsektors (13, 113) einzugreifen, der mit der Rückenlehne (B) verbunden ist,
- einen unteren Zahnriegel (20, 120), der in der Lage ist, in die Zahnung des konvexen Zahnsektors (4) einzugreifen, der mit der Sitzfläche (A) verbunden ist,
- zwischen den beiden Riegeln einen doppelten Schwenknocken (27, 127), der auf einer transversalen Achse (28, 147) verkeilt ist, welche parallel zum zweiten Gelenk (C2) verläuft und mit einem einzigen Betätigungsmittel verbunden ist, wobei dieser Nocken (27, 127) eine Verriegelungseinstellung einnehmen kann, in welcher er an Nockenprofilen (25, 26) von jedem dieser Zahnriegel (20, 22, 120, 122) anliegt, um die beiden Gelenke (C1, C2) zu blockieren, sowie eine Entriegelungsstellung, in welcher er diese Riegel (20, 22) freigibt und erlaubt, dass diese sich vom entsprechenden Zahnsektor (4, 13) entfernen.

2. Einstellvorrichtung gemäß Anspruch 1, **dadurch gekennzeichnet, dass** der obere Zahnriegel (22, 122) mit einem Anschlaghebel (33, 133) verbunden ist, der sich in das Gehäuse (8, 108) erstreckt bis in die Nachbarschaft eines halbrunden Anschlags (6, 106), der auf dem unteren konvexen Zahnsektor (4) angeordnet ist, um der Entriegelung dieses Riegels (20, 120) entgegenzuwirken, außer wenn sich die Rückenlehne (B) durch Drehung um das erste Gelenk (C1) zur Komfort-Einstellung in maximaler Vorrückposition befindet.

3. Einstellvorrichtung gemäß Anspruch 2, **dadurch gekennzeichnet, dass** der halbrunde Anschlag (6) des unteren Zahnsektors (20) von einer auf der Seite des Zahnsektors hervorstehenden Halbausstanzung gebildet ist, und zwar in der vertikalen Trajektorie des Anschlagshebels (33) des oberen Riegels (22).

4. Einstellvorrichtung gemäß Anspruch 1, **dadurch gekennzeichnet, dass** der obere Riegel (22) die allgemeine Form eines umgekehrten U's besitzt, zwischen dessen Flügeln (22b, 22c) der untere Riegel (20) verschiebbar angebracht ist, und die längsgerichteten Verschiebungen von jedem dieser beiden Riegel (20, 22) durch mindestens zwei längliche und parallele Halbausstanzungen (23) geführt sind, die in jedem der beiden angeordnet sind und in den Ausstanzungen (24) kreisen, die in dem einen oder anderen der Flansche (8a, 8b) des Gehäuses (8) angeordnet sind.

5. Einstellvorrichtung gemäß Anspruch 1, **dadurch gekennzeichnet, dass** die mit dem Nocken (27) verbundene transversale Achse (28) ebenfalls mit einer Platte (29) drehverbunden ist, die sich nach unten erstreckt und von einer Öffnung (30) durchsetzt ist, wobei diese Öffnung mit einem seitlich vom unteren Riegel (20) hervorstehenden Finger (32) zusammenwirkt, um diesen Riegel in die Entriegelungsposition zu bringen.

6. Einstellvorrichtung gemäß Anspruch 1, **dadurch gekennzeichnet, dass** der obere Riegel (122) verschiebbar zwischen zwei Halbausstanzungen (142) des Gehäuses (8) angebracht ist, wohingegen der untere Riegel (120) um eine Achse (140) angelenkt ist und einen Haken (144) aufweist, gegen welchen der untere Teil (127a) des Nockens in der Entriegelungsphase in Anlage kommt.

7. Einstellvorrichtung gemäß Anspruch 1, **dadurch gekennzeichnet, dass** zwei Flansche (8a, 8b) des Gehäuses (8) mittels Achsen (9, 10, 12) verbunden sind, von welchen eine (9) in einer halbrunden Öffnung (5) des unteren Zahnsektors (4) läuft, wobei diese Öffnung auf der Achse des ersten Gelenks (C1) zentrierte Kreisbögen aufweist und mit ihren äußeren Enden einen Begrenzungsanschlag der Komfort-Neigungseinstellung bildet.

8. Einstellvorrichtung gemäß Anspruch 1, **dadurch gekennzeichnet, dass** eine (12) der Verbindungsachsen der beiden Flansche (8a, 8b) des Gehäuses (8) zwischen den beiden Gelenken (C1, C2) in Längsrichtung nach hinten angeordnet ist und außerhalb des Gehäuses (8) durch einen hervorstehenden Stift (12a) verlängert ist, der einen Begrenzungsanschlag des Kippwegs der Rückenlehnenstruktur (B) in die Ablage-Position um das zweite Gelenk (C2) herum bildet, unter Zusammenwirkung mit zwei winkelmäßig beabstandeten Kerben (31a, 31b), die vom Ende des einen der mit der Rückenlehnenstruktur verbundenen Arme (17a, 17b) nach unten abstehen.

9. Einstellvorrichtung gemäß Anspruch 1, **dadurch gekennzeichnet, dass** die mit dem Nocken (27, 127) zum Verkeilen der Riegel (20, 22, 120, 122) verbundene transversale Achse (28, 143) frei drehbar in zwei in den Lagern jedes der Flansche (8a, 8b) des Gehäuses vorhandenen Fassungen (19) angebracht ist, wobei jede Fassung (19) nach außen durch einen zylindrischen Träger (18) verlängert ist, der mit einem der Armlager (17a, 17b) zusammenwirkt, welche mit der Rückenlehnenstruktur verbunden sind.

10. Einstellvorrichtung gemäß Anspruch 9, **dadurch gekennzeichnet, dass** die in jeder der Fassungen (19) vorgesehene Aussparung (35) länglich vertikal ist, um den Ausgleich der Fabrikationstoleranzen der Verriegelungsmittel zu sichern.

11. Einstellvorrichtung gemäß Anspruch 1, **dadurch gekennzeichnet, dass** sowohl der untere (120) als auch der obere Zahnriegel (222) auf einer transversalen Achse (140) bzw. (260) angelenkt ist, durch das zweiteilige Gehäuse (208) der Sitzflächenstruktur (A) getragen ist und mit dem entsprechenden Nockenprofil des doppelten Schwenknockens (127) zusammenwirkt, wohingegen der Nocken (127) mit einer transversalen Achse (143) drehverbunden ist, die frei drehbar in den Lagern des vorgenannten Gehäuses angebracht, von Federrückstellmitteln (145) beaufschlagt ist, die den Nocken in die Verriegelungsposition zurückzustellen sucht, und mit einem Betätigungshebel (221) verbunden ist, welcher den Nocken in die Verriegelungsposition der Zahnriegel (120, 222) bringt.

12. Einstellvorrichtung gemäß Anspruch 11, **dadurch gekennzeichnet, dass** jede der Aussparungen (261), die in den zwei Teilen (208a, 208b) des Gehäuses (208) der Sitzflächenstruktur (A) für die Enden der Antriebsachse (143) des Nockens (127) angeordnet sind, länglich sind und in im Wesentlichen paralleler Richtung zu den längsgerichteten Achsen dieses Gehäuses verlaufen, um das Fabrikationsspiel der Verriegelungsorgane auszugleichen, und der Entriegelungsbetätigungshebel (221) ist auf der Gelenksachse (C2) verkeilt, welche durch einen Schwingarm (262) an einer Kurbel (263) befestigt ist, die auf der Achse (143) des Nockens (127) verkeilt ist.

13. Einstellvorrichtung gemäß Anspruch 11, **dadurch gekennzeichnet, dass** einer der Arme (217a, 217b) der Rückenlehnenstruktur gegen seine innere Seite einen zusätzlichen Riegel (264) trägt, dessen unteres und hinteres Ende mit einer Kerbe (266) ausgestattet ist, die in der Lage ist, am Ende des Verkippens über die Vorderseite der Rückenlehnenstruktur (B) mit einem Finger (269) in Eingriff zu treten, der durch den oberen Zahnriegel (222) getragen ist, um die Rückenlehne in Ablage-Position zu verriegeln, bis der Nocken (127) im Sinne der Entriegelung betätigt wird.

## Claims

1. Device for regulating, by a single control, a seat back with a double articulation, comprising a back structure (B) connected to a seat structure (A) by a first articulation (C1) permitting regulation of the inclination of the back structure (B), and a second articulation (C2) making it possible to fold back the back structure (B) onto the seat, each articulation being associated with means for effecting locking by a toothed sector/toothed bolt and with means for controlling unlocking that give rise to the release of the toothed sector by the bolt, **characterised in that** the seat structure (A) is integral, at least on one side, with a convex toothed sector (4) centred on the first articulation (C1) which passes through it and in relation to which a housing (8) in two parts (8a, 8b) extending on either side of said toothed sector is able to pivot, whereas the back structure (B) is integral, at least on the same side, on the one hand with two arms (17a, 17b) extending on either side of the housing (8) and hinging about the second articulation (C2) carried by said housing, and, on the other hand with a concave toothed sector (13, 113) centred on said second articulation, and whereas the housing (8) contains:
- an upper toothed bolt (22, 122, 222) capable of penetrating into the toothing of the concave toothed sector (13, 113) linked to the back (B),
- a lower toothed bolt (20, 120) capable of penetrating into the toothing of the convex toothed sector (4) linked to the seat (A),
- between said two bolts, a pivoting double cam (27, 127) fixed on a transverse spindle (28, 147) which is parallel to the second articulation (C2) and connected to a single control means, said cam (27, 127) being capable of occupying a locking position in which it rests on cam-shaped profiles (25, 26) on each of the toothed bolts (20, 22, 120, 122) in order to immobilise the two articulations (C1, C2), and an unlocking position in which it releases said bolts (20, 22) and permits them to move away from the corresponding toothed sector (4, 13).

2. Regulating device according to claim 1, **characterised in that** the upper toothed bolt (22, 122) is integral with a stop arm (33, 133) extending in the housing (8, 108) as far as the vicinity of a semicircular stop (6, 106) provided on the lower convex toothed sector (4) in order to oppose the unlocking of said bolt (20, 120), except when the back (B) is in the maximum advanced position, by rotation about the first comfort-regulating articulation (C1).

3. Regulating device according to claim 2, **characterised in that** the semicircular stop (6) on the lower toothed sector (20) is formed by a half-cutout projecting, on one side of the toothed sector, into the vertical trajectory of the stop arm (33) on the upper bolt (22).

4. Regulating device according to claim 1, **characterised in that** the upper bolt (22) has the general shape of an inverted U, between the arms (22b, 22c) of which the lower bolt (20) is mounted in a sliding manner and the longitudinal displacements of each of said two bolts (20, 22) are guided by at least two elongated, parallel half-cutouts (23) provided in each of them and running in cutouts (24) provided in one or other of the side-plates (8a, 8b) of the housing (8).

5. Regulating device according to claim 1, **characterised in that** the transverse spindle (28) linked to the cam (27) is also linked in rotation to a downwardly extending blade (29) through which an aperture (30) passes, said aperture cooperating with a finger (32) projecting laterally from the lower bolt (20) in order to bring said bolt into the unlocking position.

6. Regulating device according to claim 1, **characterised in that** the upper bolt (122) is mounted so as to slide between two half-cutouts (142) in the housing (8), whereas the lower bolt (120) is articulated about a spindle (140) and has a hook (144) against which the lower part (127a) of the cam comes to rest in the unlocking phase.

7. Regulating device according to claim 1, **characterised in that** two side-plates (8a, 8b) of the housing (8) are connected by spindles (9, 10, 12), one of which runs in a semicircular aperture (5) in the lower toothed sector (4), said aperture having radii centred on the axis of the first articulation (C1) and forming, by its ends, a stop for limiting the regulation of the comfort inclination.

8. Regulating device according to claim 1, **characterised in that** one (12) of the spindles linking the two side-plates (8a, 8b) of the housing (8) is disposed between the two articulations (C1, C2) longitudinally towards the rear and is prolonged, outside the housing (8), by a projecting stud (12a) constituting a stop for limiting the tipping travel of the back structure (B) about the second articulation (C2) for forming a shelf, by cooperating with two catches (31a, 31b) which are angularly spaced apart and project towards the bottom of the end of one of the arms (17a, 17b) which is linked to the back structure.

9. Regulating device according to claim 1, **characterised in that** the transverse spindle (28, 143) linked to the cam (27, 127) for wedging the bolts (20, 22, 120, 122) is mounted in a freely rotatable manner in two sockets (19) disposed in bearings in each of the side-plates (8a, 8b) of the housing, each socket (19) being prolonged, towards the outside, by a cylindrical bearing surface (18) cooperating with one of the bearings of the arms (17a, 17b) which are integral with the back structure.

10. Regulating device according to claim 9, **characterised in that** the bore (35) provided in each of the sockets (19) is vertically oblong in order to ensure that the manufacturing tolerances of the locking means are compensated for.

11. Regulating device according to claim 1, **characterised in that** each of the toothed bolts, the lower (120) and upper bolt (222) respectively, is articulated on a transverse spindle, (140) and (260) respectively, carried by the bipartite housing (208) of the seat structure (A), and cooperates with the corresponding cam-shaped profile of the pivoting double cam (127), whereas said cam (127) is linked in rotation to a transverse spindle (143) which is mounted in a freely rotatable manner in bearings of the aforesaid housing and subjected to spring-type returning means (145) tending to bring the cam back into the locking position, and is linked to a control lever (221) bringing the cam into the position for unlocking the toothed bolts (120, 222).

12. Regulating device according to claim 11, **characterised in that** each of the bores (261) provided in the two parts (208a, 208b) of the housing (208) of the seat structure (A) for the ends of the spindle (143) for driving the cam (127) are oblong in a direction substantially parallel to the longitudinal axis of said housing in order to compensate for manufacturing clearances in the locking components, and the lever (221) for controlling unlocking is fixed on the articulating spindle (C2) and is connected by a link (262) to a crank (263) fixed on the spindle (143) of the cam (127).

13. Regulating device according to claim 11, **characterised in that** one of the arms (217a, 217b) of the back structure carries, against its inner face, an additional bolt (264) whose lower, rear end is equipped with a catch (266) which is capable, after the tipping of the back structure (B) to the front, of coming into engagement with a finger (269) carried by the upper toothed bolt (222) in order to lock the back in the table-top position until the cam (127) is activated in the unlocking direction.
